(19) Europäisches Patentamt
European Patent Office
Office européen des brevets

(11) **EP 3 510 298 B1**

(12) **EUROPÄISCHE PATENTSCHRIFT**

(45) Veröffentlichungstag und Bekanntmachung des Hinweises auf die Patenterteilung:
**06.12.2023 Patentblatt 2023/49**

(21) Anmeldenummer: **17761509.3**

(22) Anmeldetag: **05.09.2017**

(51) Internationale Patentklassifikation (IPC):
**F16D 55/226** (2006.01)    **F16D 65/097** (2006.01)
**F16D 65/18** (2006.01)

(52) Gemeinsame Patentklassifikation (CPC):
**F16D 55/226; F16D 65/0971; F16D 65/18;**
F16D 2065/026

(86) Internationale Anmeldenummer:
**PCT/EP2017/072166**

(87) Internationale Veröffentlichungsnummer:
**WO 2018/046469 (15.03.2018 Gazette 2018/11)**

(54) **SCHEIBENBREMSE FÜR NUTZFAHRZEUGE**

DISC BRAKE FOR UTILITY VEHICLES

FREIN À DISQUE POUR VÉHICULES UTILITAIRES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.09.2016 DE 102016116967**

(43) Veröffentlichungstag der Anmeldung:
**17.07.2019 Patentblatt 2019/29**

(73) Patentinhaber: **KNORR-BREMSE Systeme für Nutzfahrzeuge GmbH**
**80809 München (DE)**

(72) Erfinder:
• **BAUMGARTNER, Johann**
**85368 Moosburg (DE)**
• **PETSCHKE, Andreas**
**94127 Neuburg am Inn (DE)**

(56) Entgegenhaltungen:
**DE-A1- 19 545 744        DE-A1-102009 015 394**
**FR-A1- 2 312 690        US-A- 5 386 890**
**US-A1- 2009 000 893     US-A1- 2009 145 702**
**US-B1- 6 247 561**

**Beschreibung**

Die vorliegende Erfindung betrifft eine Scheibenbremse nach dem Oberbegriff des Anspruchs 1.

Nachfolgend wird der Bremsbelag auf der Seite der Zuspannvorrichtung der Scheibenbremse als "zuspannseitiger Bremsbelag" und der Bremsbelag auf der von der Zuspannmechanik abgewandten Seite als "reaktionsseitiger Bremsbelag" bezeichnet. Und in Bezug auf die Drehrichtung der Bremsscheibe bei einer Vorwärtsfahrt des Fahrzeugs, an dem eine solche Scheibenbremse montiert ist, wird zwischen der Einlaufseite - also der Seite des Bremssattels, an der die Bremsscheibe in den an ihr bei der Bremsung anliegenden Bremsbelag hineindreht bzw. -läuft - und der Auslaufseite - also der Seite des Bremssattels, an der die Bremsscheibe aus dem an anliegenden Bremsbelag herausläuft - unterschieden.

Es ist bekannt, dass bei Scheibenbremsen für Kraftfahrzeuge auf Grund der mechanischen Eigenschaften des Systems "Scheibenbremse mit Bremsscheibe an der Achse eines Fahrzeuges" ein ungleichmäßiger Bremsbelagverschleiß, auch tangentialer Schrägverschleiß genannt, an den Bremsbelägen auftritt. Dies gilt insbesondere für Scheibenbremsen für Nutzfahrzeuge mit einer Zuspannvorrichtung, in der ein einzelner, mittiger Druckstempel dazu vorgesehen ist, eine Zuspannkraft auf einen Bremsbelag auszuüben.

Dieser ungleichmäßige, tangentiale Schrägverschleiß -im Folgenden vereinfacht "Schrägverschleiß"- wird durch verschiedene Effekte hervorgerufen. Zu diesen gehören Selbstverstärkungseffekte, Reibung in einer Belagführung in einem Bremsträger, eine elastische Verformung des Bremssattel/rahmen)s und/oder nicht optimale Bedingungen der Zuspannkrafteinleitung in den Bremsbelag.

Diese Effekte führen einzeln und in Kombination zu einer ungleichen Druckverteilung in der Reibfläche des Bremsbelages und haben eine ungleichmäßige Abnutzung des zuspannseitigen Bremsbelages zur Folge. Ein ungleichmäßiger Verschleiß von einem oder beiden der Bremsbeläge führt zu einer Verminderung der Einsatzdauer der Bremsbeläge und damit zu erhöhten Servicekosten.

Bei einer Betätigung der Bremse kommt bei einem solchen ungleichmäßig verschlissenen Bremsbelag zunächst der weniger verschlissene Bereich dieses Bremsbelages mit der Bremsscheibe in Kontakt, was zu einem vorzeitigen Stopp des Nachstellvorganges und somit zu einem nicht ganz optimalen Nachstellvorgang führt. Durch den ungleichmäßigen Verschleiß der Bremsbeläge wird somit auch die Lüftspieleinstellung einer Scheibenbremse beeinträchtigt, was in der Regel zu einer Vergrößerung des Lüftspieles und damit zu einer Verlängerung der Ansprechzeit der Scheibenbremse führt.

Zur Vermeidung des unerwünschten Schrägverschleißes an den Bremsbelägen solcher Scheibenbremsen für Nutzfahrzeuge sind aus dem Stand der Technik verschiedene Lösungsmöglichkeiten bekannt geworden.

In der EP 1 396 652 B1 ist eine druckluftbetätigte Scheibenbremse für Nutzfahrzeuge offenbart, die einen an einem Bremsträger verschieblich geführten Bremssattel aufweist sowie eine Zuspannvorrichtung mit einem einzigen Druckstempel, der bei einer Bremsung infolge eines Zuspannens der Scheibenbremse auf den zuspannseitigen Bremsbelag einwirkt und diesen gegen die sich drehende Bremsscheibe drückt. Bei dem Zuspannen wird der reaktionseitige Bremsbelag mit dem sich verschiebenden Bremsattel ebenfalls an die Bremsscheibe gezogen. Zur Vermeidung von Schrägverschleiß ist der reaktionsseitige Bremsbelag in Bezug auf den Druckstempel außermittig in Richtung des Bremsscheibenauslaufs angeordnet. Ferner ist optional vorgesehen, den reaktionsseitigen Bremsbelag mit einer keilförmigen Form zu versehen.

Nachteilig an dieser Lösung ist der in Umfangsrichtung durch den entsprechenden Versatz des Bremsbelagschachtes des Bremsträgers erhöhte Bauraumbedarf. Darüber hinaus weist ein keilförmiger Bremsbelag über seine gesamte Lebensdauer eine deutliche verringerte Berührfläche an der Bremsscheibe auf.

In der EP 2 392 835 B1 ist eine druckluftbetätigte Scheibenbremse für Nutzfahrzeuge offenbart, die einen Schwimmsattel aufweist, der rahmenförmig ausgebildet ist und einen oberen Rand der Bremsscheibe rahmenförmig umgreift. In dem Bremssattel ist ferner eine Zuspannvorrichtung mit einem einzigen Druckstempel sowie einem Bremsträger angeordnet. Zur Vermeidung von Schrägverschleiß ist der zuspannseitige Bremsbelag in Bezug auf den Druckstempel außermittig in einem in Umfangsrichtung in Richtung des Bremsscheibenauslaufs versetzten Bremsträger angeordnet.

Nachteilig an dieser Lösung ist, dass zur Realisierung dieser Lösung mit einem versetzten Belagschacht ein erhöhter konstruktiver Aufwand und ein erhöhter Bauraumbedarf in Umfangsrichtung erforderlich sind, um die gewünschte Funktion zu gewährleisten.

In der FR 2 312 690 A ist eine Scheibenbremse für einen Personenkraftwagen offenbart. Zur Vermeidung von Bremsgeräuschen, wie z.B. Bremsenquietschen, ist zumindest ein Bremsbelag der Scheibenbremse einlaufseitig einseitig angefast.

Aus der DE 10 2011 010 912 A1 ist es ferner bekannt, einen zuspannseitigen Bremsbelag auslaufseitig mit einer Fase genannten Anschrägung zu versehen. Dabei ist es nach der DE 10 2011 010 912 A1 vorgesehen, dass zwei Fasen symmetrisch zu dem Bremsbelag angeordneten werden, wobei die Fasen konvex gekrümmte Fasenkannten aufweisen. Zudem weist dieser Bremsbelag zwei seitlich in Umfangsrichtung vorstehende laschen auf, mit denen er in einem Führungsschacht einer Scheibenbremsanordnung eingehängt ist.

Das Dokument US 6 247 561 B1 beschreibt eine Unterlegscheibenstruktur, die zwischen einem Reibungselement und einem Druckelement eingefügt werden kann und so konfiguriert ist, dass das Reibungselement gegen ein rotierendes Element eines Bremssystems gedrückt wird. Die Unterlegblechstruktur umfasst ein Blechelement mit einander gegenüberliegenden ersten und zweiten Oberflächen, die eine im Wesentlichen gleichmäßige Dicke von ausreichender Größe definieren, um sich während des Drückens des Reibungselements nicht zu verformen. Es gibt keine viskoelastische Schicht auf der ersten oder zweiten Oberfläche. Die erste und die zweite Oberfläche definieren auch einen Wellenformquerschnitt mit einer Amplitude und einer Wellenlänge, die sich im Wesentlichen über die gesamte Länge des Plattenelements erstrecken; die Amplitude und Wellenlänge haben ein ausreichendes Verhältnis, um eine selektive Geräusch- und Schwingungsdämpfung, Isolierung und Wärmeableitung für das Bremssystem bereitzustellen. Zusätzlich sind die Amplitude und Wellenlänge so konfiguriert, dass sie variabel abstimmbar sind, wodurch unterschiedliche vorbestimmte Niveaus der Geräusch- und Schwingungsdämpfung und -dämpfung erreicht werden. Der Wellenformquerschnitt ist vorzugsweise sinusförmig.

Dokument US2009145702 A1 offenbart einen Bremsbelag, der eine Abschrägung des Reibbelags an der Auslaufseite aufweist, wobei die Abschrägung des Reibbelags in einer Richtung parallel zur Bremsscheibendrehachse nicht an der auslaufseitigen Kante der Trägerplatte endet sondern zu dieser beabstandet endet.

Das Dokument US 2009 / 0000893 A1 betrifft eine verbesserte Struktur für einen Bremsklotz, der für die Verwendung in einer Scheibenbremsanordnung geeignet ist. Der Bremsklotz umfasst eine Trägerplatte und einen Reibbelag. Der Reibbelag weist eine Längssymmetrieachse auf. Der Bremsklotz ist so ausgelegt, dass er einen Flächenschwerpunkt des Reibbelags relativ zu einem Schwerpunkt des vom Kolben ausgeübten Drucks ausrichtet, um den tangentialen Kegelverschleiß des Reibbelags zu reduzieren. Die Kraftschwerpunktsachse und die Flächenschwerpunktsachse definieren ferner einen Versatz, so dass der Versatz während eines Bremsvorgangs abnimmt.

Es ist die Aufgabe der vorliegenden Erfindung, eine Scheibenbremse für Nutzfahrzeuge mit einer Zuspannvorrichtung, die einen einzigen Druckstempel aufweist, anzugeben, welche die Nachteile des Standes der Technik zumindest teilweise behebt.

Nach Anspruch 1 ist vorgesehen, dass

A) eine Wirkebene der Druckplatte einen Mittenversatz in Richtung der Auslaufseite beabstandet zu der Mittelebene der Scheibenbremse aufweist, und/oder

B) wenigstens der zuspannseitige Bremsbelag eine Abschrägung an der Auslaufseite aufweist.

Derart werden eine oder kombiniert zwei Maßnahmen A) und B$_1$) zur Kompensation des Schrägverschleißes der Bremsbeläge getroffen und dann im letzteren Fall auf zwei Bauteile der Scheibenbremse verteilt, so dass jedes dieser Bauteile jeweils nur einen Teil des erforderlichen Betrages zur Kompensation des Schrägverschleißes zu leisten hat und entsprechend ausgebildet werden kann.

Nach einer bevorzugten Variante der Erfindung weist der reaktionsseitige Bremsbelag eine Abschrägung an der Auslaufseite auf. Eine Kompensation des Schrägverschleißes kann dadurch ganz oder teilweise erreicht werden. Dadurch kann ein zusätzlicher Mittenversatz des Druckstempels und Abschrägung des zuspannseitigen Bremsbelages vorteilhaft kleiner ausgebildet werden.

Erfindungsgemäß weist die Druckplatte eine nichtkreisrunde, vorzugsweise ovale Geometrie auf. Dadurch ist einfach und bauraumsparend ein Druckstempel realisierbar, der mit einem definierten Mittenversatz wirkt.

Nach einer weiteren Variante ist als Maßnahme C) vorgesehen, dass ein einlaufseitiger Ansatz der zuspannseitigen Trägerplatte des zuspannseitigen Bremsbelages in eine einlaufseitige Ausnehmung des Bremsträgers eingreift. Auch hierdurch wird einem Schrägverschleiß des zuspannseitigen Bremsbelages entgegengewirkt.

Die Korrekturmaßnahmen A) und/oder B$_1$) und/oder C) sind unabhängig voneinander bzw. Einzeln vorteilhaft, können sich aber auch zu einem gewünschten Korrekturverhalten ergänzen. Geeignete Abstimmungen und Auslegungen der ein, zwei oder drei Maßnahmen A) und/oder B$_1$) und/oder C) findet der Fachmann im Versuch.

Ein Teil der Maßnahmen A) und C) ist für die jeweilige Scheibenbremse betragsmäßig fest ausgelegt. Der andere Teil der Maßnahmen (hier z.B. die Maßnahme B$_1$) ist variabel und kann sich entsprechend des Verschleißzustandes des Bremsbelages anpassen.

Derart ist es mit einer Kombination der Maßnahmen vorteilhaft und einfach auch möglich, belagdickenabhängige und belagdickenunabhängige Ursachen des Schrägverschleißes auszugleichen. Dadurch kann der außermittige Versatz der Druckplatte vorteilhaft geringer als ohne die Abschrägung ausgebildet werden.

Durch die auslaufseitige Abschrägung des Reibbelags die auch als unabhängige Variante der Erfindung zu betrachten ist, wird ein variables Korrekturrnoment aufgrund der sich in Abhängigkeit von der Dicke des Reibbelags vergrößernden Distanz zwischen dem Flächenschwerpunkt der Trägerplatte und der Wirkebene der Druckplatte durch eine Verschiebung des Flächenschwerpunktes des Reibbelags entgegen der Drehrichtung der Bremsscheibe hervorgerufen. Dadurch wird einfach und damit vorteilhaft der Reibbelag so gestaltet, dass er zur Kompensation des Schrägverschließes definiert beiträgt.

Nach einer weiteren bevorzugten Ausführungsvariante der Erfindung, ist die Abschrägung (Maßnahme $B_2$) derart ausgebildet, dass sich bei noch unverschlissenem Reibbelag zunächst eine Überkompensation des tangentialen Schrägverschleißes erfolgt, die mit abnehmender Dicke des Reibbelags geringer wird und ab einer mittlerer Dicke des Reibbelags in eine Unterkompensation übergeht. Dadurch wird einfach und vorteilhaft ein gleichmäßiger Verschleiß ohne Schrägverschleiß des Reibbelags erreicht.

In einer weiteren bevorzugten Ausführungsvariante der Erfindung dient ein Teil der Abschrägung der zumindest teilweisen Kompensation des Servoeffektes während ein anderer Teil die Wirkung der Reibkraft der Trägerplatte am Bremsträger zumindest teilweise ausgleicht. Dadurch kann die Abschrägung definiert auf die Anforderungen der jeweiligen Scheibenbremse einfach und vorteilhaft angepasst werden.

Sofern im Folgenden der Mittenversatz des Druckstempels 8 erwähnt wird, so ist damit der Abstand der Wirkebene W des Druckstempels 8 von der Mittelebene S der Scheibenbremse 1 gemeint, der durch den Versatz des Flächenschwerpunktes der Druckplatte 9 relativ zur Symmetrieebene des Druckstempels 8 hervorgerufen wird.

In einer weiteren Ausführungsvariante der Erfindung liegt der Abstand der Wirkebene W des Druckstempels und der Mittelebene S der Scheibenbremse zwischen e = 0 mm und e = 10 mm, vorzugsweise zwischen e = 2 mm und e = 4 mm. Dadurch ergibt sich vorteilhaft eine bauraumsparende Bauform trotz des Versatzes des Krafteinleitungspunktes an der Druckplatte.

Es kann weiter vorteilhaft bevorzugt vorgesehen sein, dass die Abschrägung des Reibbelags in einer Richtung parallel zur Bremsscheibendrehachse nicht an der auslaufseitigen Kante der Trägerplatte endet sondern zu dieser beabstandet endet, vorzugsweise derart, dass der Abstand der Rest-Reibbelagdicke entspricht. Gerade durch die letztgenannte Maßnahme wird auch eine einfache Möglichkeit zur optischen Kontrolle des Belagverschleißes geschaffen.

Nach einer weiteren Variante kann vorgesehen sein, dass die Abschrägung des Reibbelags in Umfangsrichtung parallel zur Bremsscheibe nicht an der auslaufseitigen Kante der ansonsten vorzugsweise symmetrisch zur Mittelebene ausgestalteten Trägerplatte endet sondern zu dieser beabstandet ist. Auch durch diese Maßnahme kann ergänzend einem Schrägverschleiß entgegen gewirkt werden.

Die Erfindung schafft ferner auch den Gegenstand des Anspruchs 8, der auch eine eigenständige Erfindung darstellt.

Ein Bremsbelagsatz kann einen Ersatzteilsatz für die beschriebene Scheibenbremse bilden, ist hier aber kein erfindungsgemäßer Gegenstand.

Die Erfindung schafft schließlich auch ein Fahrzeug mit einer oder mehreren der beanspruchten Scheibenbremsen.

Weitere vorteilhafte Ausführungen der Erfindung sind den Unteransprüchen zu entnehmen.

Ausführungsbeispiele des erfindungsgemäßen Gegenstandes sind in den Zeichnungen dargestellt und werden im Folgenden näher beschrieben. Es zeigt:

Figur 1:     eine räumliche Ansicht einer erfindungsgemäßen Scheibenbremse;
Figur 2:     eine weitere räumliche Ansicht der Scheibenbremse aus Fig. 1;
Figur 3:     eine räumliche Ansicht des Druckstempels und des zuspannseitigen Bremsbelags der Scheibenbremse aus Fig. 1;
Figur 4:     eine Vorderansicht des Druckstempels und des zuspannseitigen Bremsbelages aus Fig. 3;
Figur 5a:    eine Draufsicht des Druckstempels und des zuspannseitigen Bremsbelags aus Fig. 3.
Figur 5b:    eine Seitenansicht des Druckstempels und des zuspannseitigen Bremsbelags aus Fig. 3
Figur 6a:    eine Draufsicht des Druckstempels aus Fig. 3;
Figur 6b:    eine Vorderansicht des Druckstempels aus Fig. 3;
Figur 6c:    eine Rückansicht des Druckstempels aus Fig. 3;
Figur 7:     eine Draufsicht des zuspannseitigen Bremsbelags aus Fig. 3
Figur 8:     eine Ausschnittsvergrößerung der Auslaufseite des zuspannseitigen Bremsbelags; und
Figur 9:     eine weitere Ausschnittsvergrößerung der Auslaufseite des zuspannseitigen Bremsbelags.
Figur 10a:   eine Draufsicht einer Auführungsvariante des Bremsbelags aus Fig. 3;
Figur 10b:   eine Draufsicht einer weiteren Auführungsvariante des Bremsbelags aus Fig. 3;
Figur 10c:   eine Draufsicht einer weiteren Auführungsvariante des Bremsbelags aus Fig. 3;
Figur 10d:   eine Draufsicht einer weiteren Auführungsvariante des Bremsbelags aus Fig. 3.

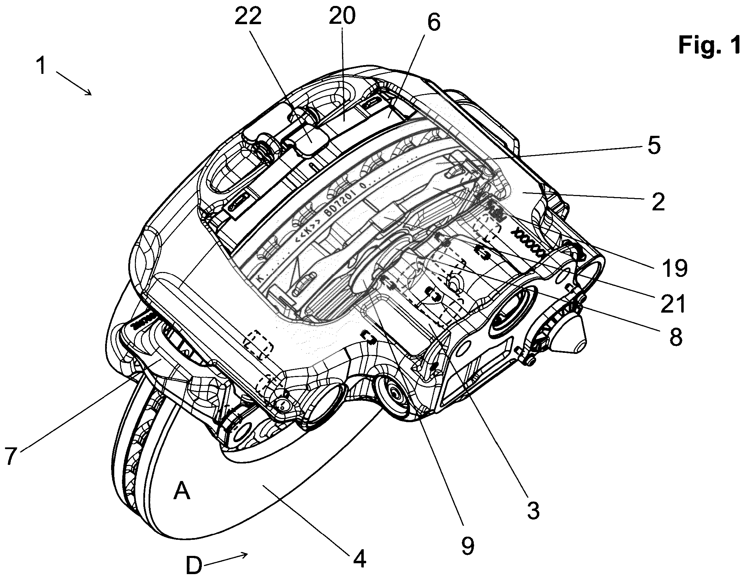

In der Figur 1 ist ausschnittsweise eine Scheibenbremse 1 für ein Nutzfahrzeug dargestellt, mit einem Bremssattel 2, der eine Bremsscheibe 4 übergreift und in dem Bremsbeläge 5, 6 positioniert sind, die im Fall einer Bremsung gegen die Bremsscheibe 4 pressbar sind.

Der Bremssattel 2 ist hier als Schwimm- oder Gleitsattel ausgebildet ist. Alternativ kann die Scheibenbremse 1 auch als Festsattelbremse ausgebildet sein. Der Bremssattel 2 übergreift - hier rahmenartig - eine während der Fahrt eines mit der Scheibenbremse 1 ausgerüsteten Fahrzeugs drehbare Bremsscheibe 4.

Auf die Bremsscheibe 4 wirken beim Bremsen der zuspannseitige Bremsbelag 5 und der reaktionsseitige Bremsbelag 6 ein, wobei der reaktionsseitige Bremsbelag 6 vorzugsweise symmetrisch zur Ebene der Bremsscheibe 4 in Bezug auf den zuspannseitigen Bremsbelag 5 angeordnet ist.

Die Bremsbeläge 5, 6 sind zudem auch im Wesentlichen symmetrisch zu einer Mittelebene S der Scheibenbremse 1 in der Scheibenbremse 1 angeordnet. Hier sind sie in einen Bremsträger 7 eingesetzt und beidseits der Bremsscheibe 4 in Schächten dieses Bremsträgers 7 geführt. Der reaktionsseitige Bremsbelag 6 könnte bei einem nur einseitig der Bremsscheibe 4 vorgesehenen Bremsträger 7 auch direkt in einen Belagschacht des Bremssattels 2 eingesetzt sein (hier nicht dargestellt).

Der Bremsträger 7 umgreift die Bremsscheibe 4 rahmenartig in einem Umfangsrandbereich. Die Zuspannvorrichtung der Scheibenbremse 1 weist einen einzigen Druckstempel 8 auf. Der Druckstempel 8 ist parallel zur Drehachse der Bremsscheibe 4 verschieblich und hier verdrehsicher geführt.

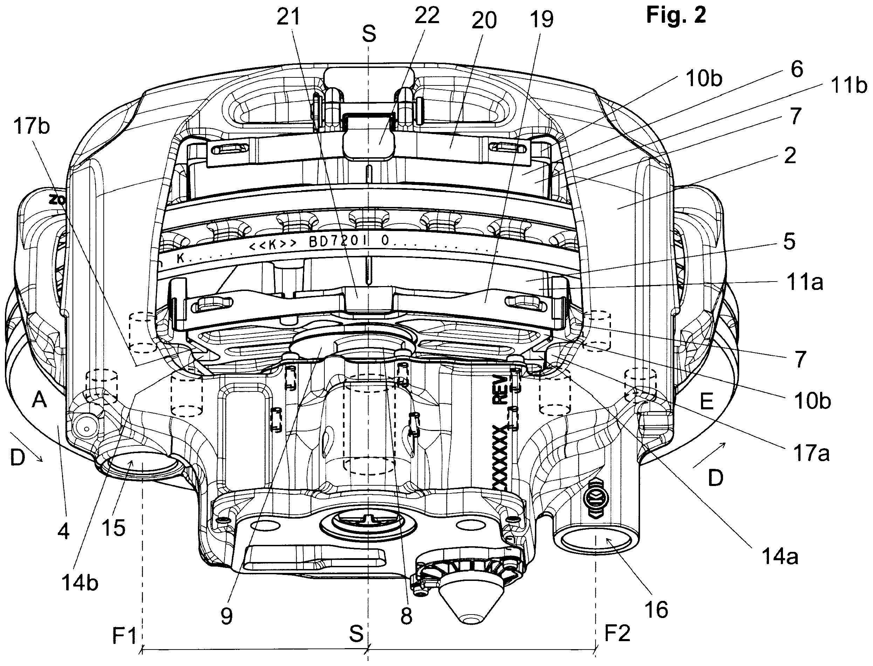

Bei einer Ausbildung als Schiebesattel-Scheibenbremse, wie sie in Fig. 1 als eine besonders bevorzugte - aber nicht zwingende - Ausführungsform dargestellt ist, ist der Bremssattel 2 an dem Bremsträger 7 verschieblich geführt. Dazu dienen zwei Führungslager 15, 16 (siehe Fig. 1), die zwischen dem Bremssattel 21und dem Bremsträger 7 ausgebildet sind und die sich parallel zur Bremsscheibendrehachse erstrecken. Die Bremsscheibendrehachse liegt auf einer Mittelebene S, die wie eine Symmetrieachse derart ausgestaltet ist, dass, dass jeder ihrer Flächenpunkte gleichweit von Punkten entfernt ist, die auf Geraden F1, F2 liegen, welche zentrisch durch die Mitte der Führungslager 15, 16 verlaufen (siehe Fig. 2).

Der zuspannseitige Bremsbelag 5 und der reaktionsseitige Bremsbelag 6 weisen jeweils einen Reibbelag 11a, 11b auf, der jeweils auf einer Trägerplatte 10a, 10b angebracht ist und mit dieser verbunden ist (siehe auch Fig. 2).

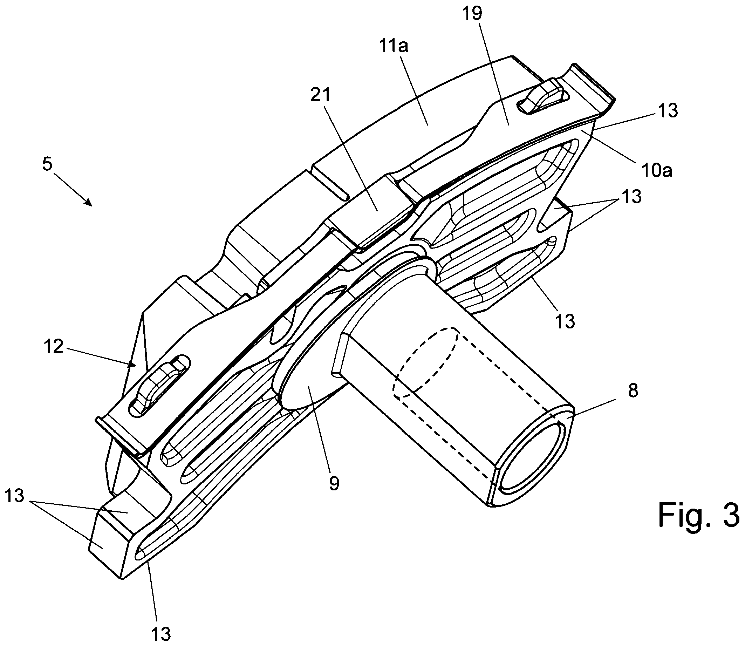

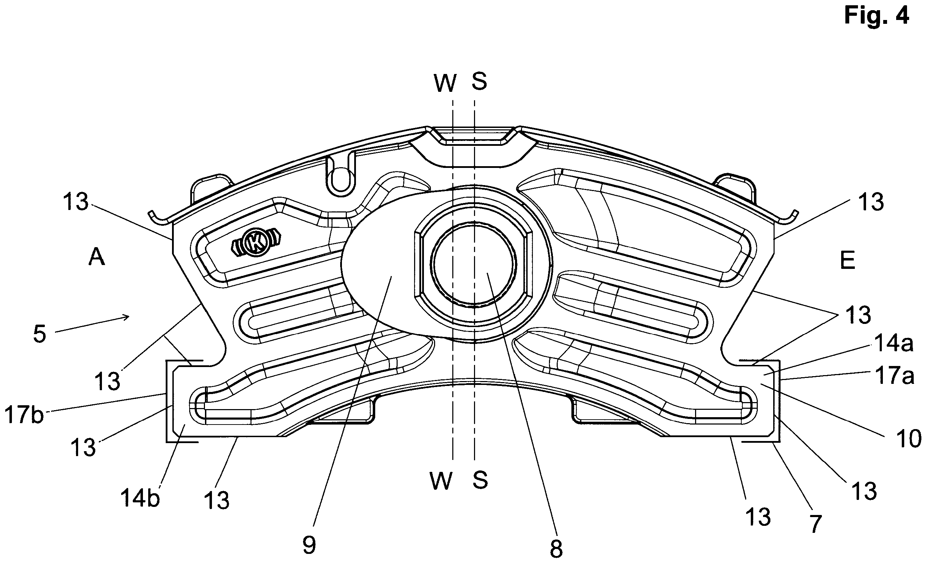

Jede dieser Trägerplatten 10a, b weist nach Fig. 3 bzw. Fig. 4 Führungsflächen 13 auf, an denen der reaktionsseitige Bremsbelag 6 im Bremsträger 7 verschieblich geführt ist. Der reaktionsseitige Bremsbelag 6 weist ebenfalls einen Reibbelag 11b auf, der stoffschlüssig mit der Trägerplatte 10b verbunden ist.

Mit Führungsflächen 13 sind sämtliche Flächen der Trägerplatten 10, 10b bezeichnet, die den zuspannseitigen Bremsbelag 5 und hier entsprechend den reaktionsseitigen Bremsbelag 6 verschieblich parallel zur Bremscheibenachse im Bremsträger 7 führen.

Die Trägerplatten 10a, b des zuspannseitigen Bremsbelages 5 und des reaktionsseitigen Bremsbelages 6 können gleich oder verschieden ausgebildet sein. Sie sind hier ferner jeweils symmetrisch zu der Symmetrieebene S ausgebildet.

Der Bremssattel 2 weist einen Gehäuseabschnitt 3 auf, in dem eine Zuspannvorrichtung, d.h. ein mehrstückiges Mittel, insbesondere eine Mechanik, zum Zuspannen der Scheibenbremse 1 angeordnet ist (hier nicht zu erkennen). Der Gehäuseabschnitt 3 ist hier einstückig mit dem Bremssattel 2 ausgebildet. Die Scheibenbremse 1 ist hier für eine fluidische, insbesondere pneumatische Aktuierung ausgelegt. Alternativ ist auch eine elektrische oder elektromechanische Aktuierung der Scheibenbremse 1 möglich.

Der Druckstempel 8 ist zudem in der Mittelebene S der Scheibenbremse 1 bzw. in der Mittelebene des Gehäuses 3 der Zuspannvorrichtung in dem Gehäuseabschnitt 3 verschieblich geführt. Er weist an seiner dem zuspannseitigen Bremsbelag 5 zugewandten Seite eine Druckplatte 9 auf.

Bei einer Bremsung einer als Schiebesattelscheibenbremse ausgebildeten Scheibenbremse 1 wirkt die Zuspannvorrichtung mit dem einzigen Druckstempel 8 mit der Druckplatte 9, der infolge eines Zuspannens der Scheibenbremse 1 auf den zuspannseitigen Bremsbelag 5 ein und schiebt diesen gegen die sich drehende Bremsscheibe 4. Bei dem Zuspannen wird der reaktionsseitige Bremsbelag 6 ferner mit dem sich verschiebenden Bremssattel 2 auf der anderen Seite der Bremsscheibe 4 an die Bremsscheibe 4 gezogen.

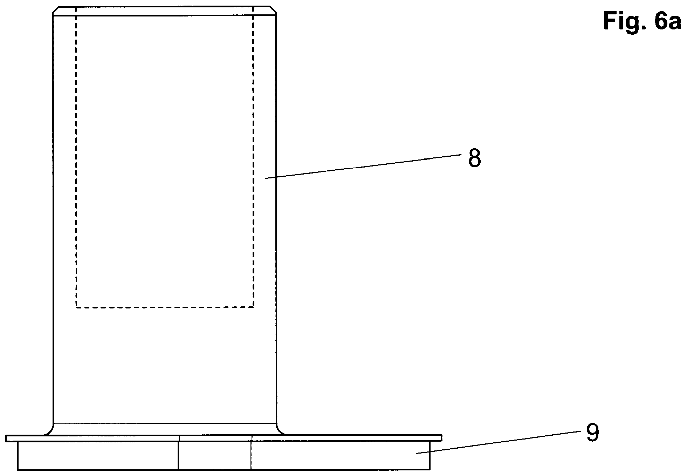

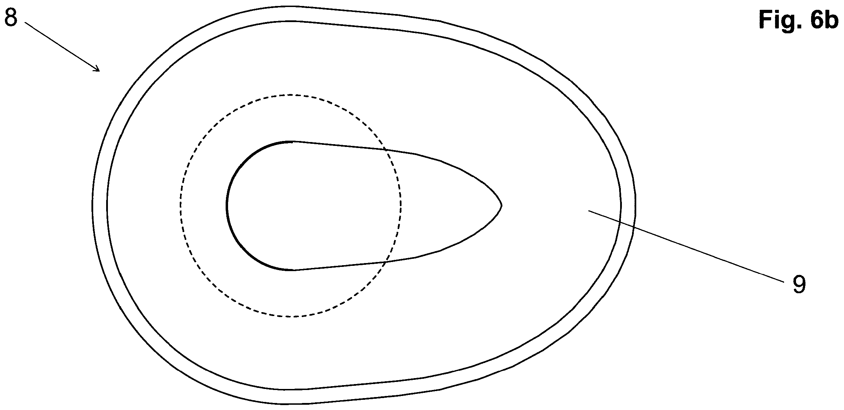

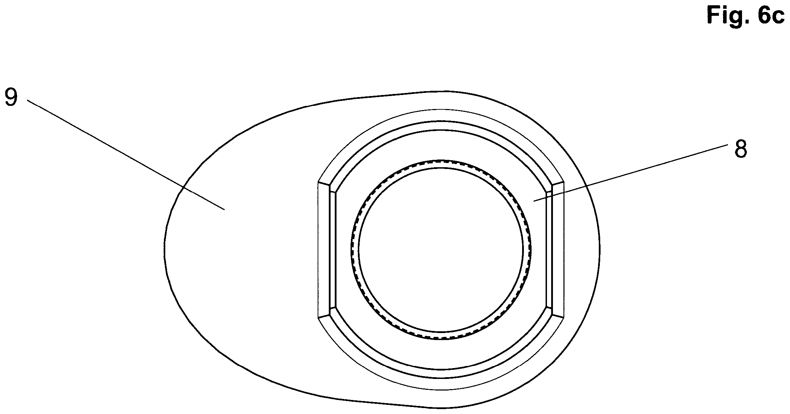

In der Fig. 6a, insbesondere in den Figuren 6b und 6c ist gut erkennbar dargestellt, dass die Druckplatte 9 des Druckstempels 8 eine zur Mittelebene S asymmetrische, d.h. hier eine nicht kreisrunde, hier vorteilhaft ovale, Geometrie aufweist. Die Druckplatte 9 und der Druckstempel 8 können vorteilhaft einstückig ausgestaltet sein. Es ist aber auch eine zwei- oder mehrstückige Ausgestaltung denkbar.

In Fig. 2 ist gut erkennbar dargestellt, dass die Druckplatte 9 - hier die ovale Druckplatte 9 bzw. das Oval - gegenüber der Mittelebene S der Scheibenbremse 1 einseitig in Richtung der Auslaufseite A der Bremsscheibe 4 versetzt ist. Dadurch ergibt sich ein Flachenschwerpunkt der Druckplatte 9, der außerhalb der Mittelebene S der Scheibenbremse 1 liegt, so dass die Wirkebene W des Druckstempels 8 auf den zuspannseitigen Bremsbelag 5 in Richtung der Auslaufseite A der Bremsscheibe 4 verschoben ist.

Der Druckstempel 8 wirkt also außerhalb der Mittelebene S der Scheibenbremse 1 auf den zuspannseitigen Bremsbelag 5 (siehe dazu auch Fig. 4). Die Druckplatte 9 und der Druckstempel 8 können auch insgesamt einen Körper bilden, der eine nichtkreisrunde, asymmetrische Querschnittsgeometrie aufweist.

Durch die Maßnahme A):

"eine in Bezug auf die Mittelebene S der Scheibenbremse 1 außermittig wirkende Druckplatte 9 des Druckstempels 8"

wird vorteilhaft und mit geringem Aufwand wiederum ein Teilbetrag des sich im Betrieb der Scheibenbremse 1 sonst einstellenden Schrägverschleißes kompensiert.

In Fig. 2 ist die asymmetrisch auf den zuspannseitigen Bremsbelag 5 wirkende Druckplatte 9 gut erkennbar dargestellt. Ebenfalls gut sichtbar dargestellt ist der im Wesentlichen symmetrische Aufbau der Scheibenbremse 1.
In Fig. 3 sind der Druckstempel 8 mit der Druckplatte 9 sowie der zuspannseitige Bremsbelag 5 separat ohne angrenzende Bauteile der Scheibenbremse 1 dargestellt.
Die Trägerplatte 10a dieses Bremsbelages 5 weist auf ihrer dem Druckstempel 8 bzw. der Druckplatte 9 zugewandten Seite mehrere taschenartige Vertiefungen auf, so dass ihre Oberfläche Rippen ausbildet.
In Fig. 4 ist gut erkennbar dargestellt, dass der Flächenschwerpunkt der Druckplatte 9 - also die Wirkebene W - der Druckplatte 9 außerhalb der Mitteleebene S der Scheibenbremse 1 liegt. Deshalb wirkt die Kraft, mit der der Druckstempel 8 auf die Trägerplatte 10a des zuspannseitigen Bremsbelags 5 in Bezug auf die Mittelebene S der Scheibenbremse 1 außermittig.

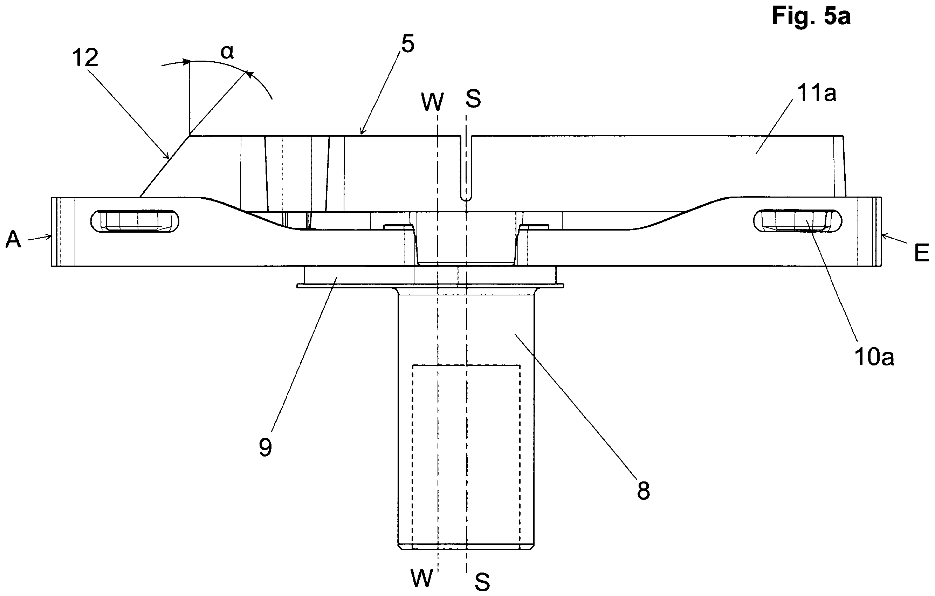

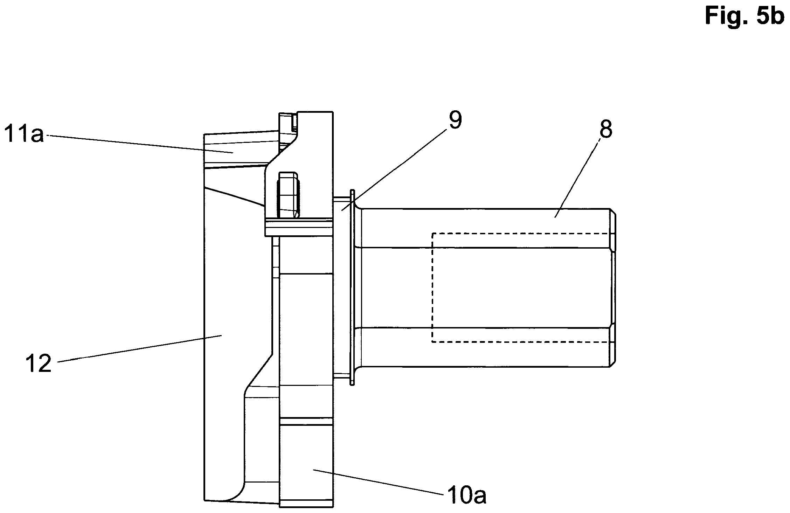

In den Figuren 5a und 5b ist erkennbar, dass der Reibbelag 11a des zuspannseitigen Bremsbelages 5 auf der (bezogen auf die bevorzugte Drehrichtung der Bremsscheibe 4 bei einer Vorwärtsfahrt) Auslaufseite A des zuspannseitigen Bremsbelags 5 abgeschrägt ist. Es wird eine Fase bzw. Abschrägung 12 ausgebildet. Diese Abschrägung 12 ist vorzugsweise in einem spitzen Winkel alpha bevorzugt zwischen 10° und 30°, besonders bevorzugt zwischen 15° und 25°zur Bremsscheibendrehachse und zur Mittelebene S angeordnet. Auf der Einlaufseite E ist keine solche Fase ausgebildet. Der Reibbelag 11a ist hier am einlaufseitigen Rand parallel oder nahezu parallel zur Mittelebene S ausgerichtet.
Durch die auslaufseitige Abschrägung 12 des Reibbelags 11a wird der Flächenschwerpunkt des Reibbelags 11a in Richtung der Einlaufseite E des zuspannseitigen Bremsbelages 5 verschoben, so dass der Reibbelag 11a in Bezug auf die Mittelebene S der Scheibenbremse 1 außermittig wirkt.

Durch die Maßnahme $B_1$):

"eine auslaufseitige Abschrägung 12 des Reibbelags 11a des zuspannseitigen Bremsbelages 5"

wird wiederum ein Korrekturmoment erzeugt. Das Korrekturmoment entsteht auf Grund der Verschiebung des Flächenschwerpunktes des Reibbelages 11 gegenüber der Wirkebene W der Druckplatte 9 auf die Trägerplatte 10. Die Abschrägung 12 dient zur Kompensation bzw. zum Ausgleich der sich durch Verschleiß verändernden Dicke des Reibbelages 11 und des sich dadurch betragsmäßig verändernden Servomomentes Ms. Durch die Abschrägung 12 ist der Flächenschwerpunkt des Reibbelages 11 in seinem Neuzustand am weitesten von der Wirkebene der Druckplatte 9 versetzt. Nimmt die Dicke des Reibbelages 11 durch Verschleiß ab, wandert der Flächenschwerpunkt des Reibbelages 11 sukzessive in Richtung der Wirkebene W der Druckplatte 9 auf die Trägerplatte des Bremsbelages 5.

Nach einer bevorzugten - aber nicht für jede Ausführungsform zwingenden - Ausgestaltung der Scheibenbremse 1 weist die Trägerplatte 10a des zuspannseitigen Bremsbelags 5 hier zwei seitliche - sich im Umfangsrichtung erstreckende - Ansätze 14a, 14 b auf, die in korrespondierende Ausnehmungen 17a, 17b des Bremsträgers 7 eingreifen (siehe Fig. 2 und Fig. 4, in welcher die Ausnehmungen angedeutet worden sind, sie erstrecken sich senkrecht zur Bildebene der Fig. 4).
Der einen der Ansätze 14a ist einlaufseitig an der Trägerplatte 10a ausgebildet und der andere Ansatz 14b auslaufseitig. Bei einer Bremsung 1 in Vorwärtfahrt wirkt der einlaufseitige Ansatz 14a als Stützelement, so dass sich ein Teil der Bremskraft über diesen Ansatz 14a in den Bremsträger 7 eingeleitet wird.
Der zuspannseitige Bremsbelag 5 und der reaktionsseitige Bremsbelag 6 weisen ferner je eine Feder 19, 20 auf ihrer oberen Kante auf. Die Feder 19 des zuspannseitigen Bremsbelages 5 durchsetzt einen an der Belagträgerplatte 10a liegenden Hinterschnitt, der durch einen Steg 21 abgedeckt wird, so dass eine Art Nut gebildet wird, in die die Feder 19 eingreift.. Die Feder 20 des reaktionsseitigen Bremsbelages 6 wird von einem Niederhaltebügel 22 niedergehalten, der an einem Ende am Bremssattel 2 festgelegt ist und der axial nur den reaktionsseitigen Bremsbelag 6, nicht aber den zuspannseitigen Bremsbelag 5 übergreift, der als Sicherung gegen radiales Ausfallen die Ansätze 14a, 14b aufweist. Derart werden der zuspannseitige Bremsbelag 5 und der reaktionseitige Bremsbelag 6 hier konstruktiv einfach und sicher an der Scheibenbremse 1 angeordnet und gehalten.

Durch die Maßnahme C)

"einlaufseitiger Ansatz 14a der zuspannseitigen Trägerplatte 10a des zuspannseitigen Bremsbelages 5, der in eine einlaufseitige Ausnehmung 17a des Bremsträgers 7 eingreift" wird wiederum einem Schrägverschleiß des zuspannseitigen Bremsbelages 5 entgegengewirkt.

Die Trägerplatte 10b des reaktionsseitigen Bremsbelags 6 weist ebenfalls eine zur Mittelebene S im Wesentlichen symmetrische Geometrie auf (siehe auch Fig. 4). Sie weist hier keine Ansätze 14 auf, kann aber optional mit solchen versehen werden. Die Trägerplatten 10a, 10b sind vorzugsweise aus einem Metall, insbesondere einem Gußeisenwerkstoff hergestellt.

Die Maßnahmen A) und/oder $B_1$) und/oder C) zur Kompensation des Schrägverschlei-ßes sind unabhängig voneinander bzw. Einzeln vorteilhaft, ergänzen sich aber auch, wenn sie gemeinsam vorgesehen sind und sind daher so aufeinander abzustimmen, dass sie sich insgesamt zu einem gewünschten Korrekturverhalten zusammenfügen. Geeignete Abstimmungen und Auslegungen der ein, zwei oder drei Maßnahmen A) und/oder $B_1$) und/oder C) findet der Fachmann im Versuch.

Mit einer Kombination dieser Maßnahmen A), $B_1$), C) ist es auch vorteilhaft möglich, belagdickenabhängige und belagdickenunabhängige Ursachen des Schrägverschleißes auszugleichen.

Dadurch kann der außermittige Versatz der Druckplatte 9 vorteilhaft geringer als ohne die Abschrägung 12 ausgebildet werden.

In Hinsicht auf die Maßnahme $B_1$) sind weitere vorteilhafte Ausgestaltungen erfunden worden, die auch eine eigenständige Erfindung darstellen.

So ist es vorteilhaft, wenn bei noch unverschlissenem Reibbelag 11a des zuspannseitigen Bremsbelags 5 zunächst eine Überkompensation des Schrägverschleißes erfolgt, die mit abnehmender Dicke des Reibbelags 11a geringer wird und ab einer mittlerer Dicke des Reibbelags 11a in eine Unterkompensation übergeht.

Durch diese vorteilhafte Ausbildung der Abschrägung 12' kann die Abweichung vom Idealzustand relativ geringgehalten werden, insbesondere ist bei einem vollverschlissenen Reibbelag 11a eine gleichmäßige Dicke des verbleibenden Reibbelags 11a erzielbar.

Technische Zusammenhänge dieser Maßnahme $B_2$) als vorteilhafte Weiterbildung der Maßnahme $B_1$) werden im Folgenden ausführlich beschrieben. Außerdem werden weitere Vorteile und Auslegungen der Maßnahmen $B_1$) und/oder $B_2$) aufgezeigt.

Durch die auslaufseitige Abschrägung 12 des Reibbelags 11a des zuspannseitigen Bremsbelages 5 wird eine Verkleinerung der Wirkfläche auf der Auslaufseite A des Bremsbelages 5 bewirkt.

Unter Einhaltung des Mittenversatzes der Druckplatte 9 des Druckstempels 8 ergibt sich dabei eine Erhöhung der Flächenpressung des Reibbelags 11a auf der Auslaufseite A und eine Minderung der Flächenpressung auf der einlaufenden Seite E des zuspannseitigen Bremsbelags 5.

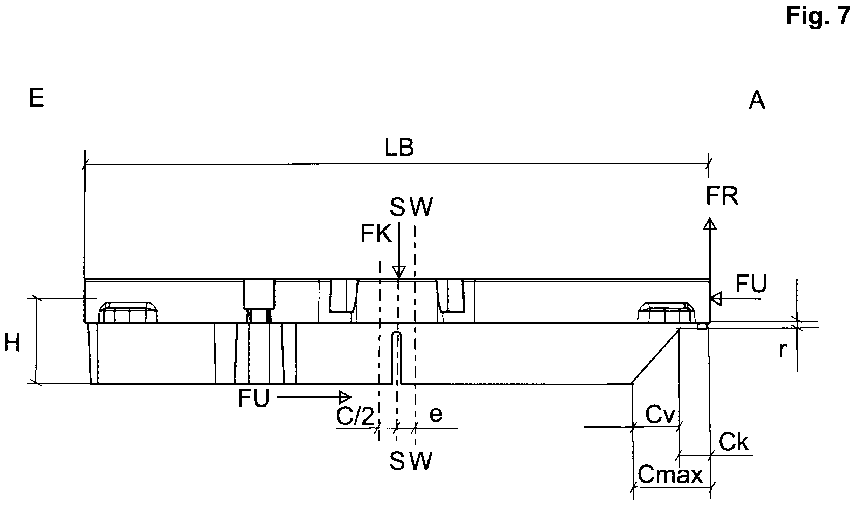

Auf diese Weise ist eine Kompensation der beiden den Schrägverschleiß verursachende Effekte möglich. Die Erläuterung der beiden Effekte X) und Y) verdeutlichen Fig. 7 sowie die folgenden Ausführungen.

Die vorzugsweise nur auslaufseitige Abschrägung 12 des Reibbelags 11a bringt den Vorteil mit sich, dass der dem Schrägverschleiß entgegenwirkende Effekt mit abnehmender Dicke des Reibbelags 11a ebenfalls abnimmt. Damit ist diese Maßnahme geeignet, einen ebenfalls von der Dicke des Reibbelags 11a bzw. des Bremsbelags 5 abhängigen "Servoeffekt" zu kompensieren.

Mit dem Begriff "Servoeffekt" -oder Effekt X)- ist im Rahmen dieser Schrift ein Drehmoment gemeint, dessen Betrag sich durch das Zusammenwirken der Umfangskraft Fu der Bremsscheibe 4 mit einem Hebelarm H ergibt, wobei sich der Betrag des Hebelarms H sich durch die Dicke des Reibbelags 11a des zuspannseitigen Bremsbelags 5 und der halben Dicke der Trägerplatte 10a des zuspannseitigen Bremsbelags 5 ergibt. Der Betrag dieses Drehmoments Ms ist abhängig von der durch Verschleiß kleiner werdenden Höhe H (siehe dazu auch Fig. 7) des Bremsbelages 5.

Der zweite, den Schrägverschleiß der Bremsbeläge 5, 6 verursachende Einfluß oder Effekt Y), nämlich die an den Führungsflächen 13 der Trägerplatte 10a entstehende und der Zuspannkraft $F_K$ der Scheibenbremse 1 entgegen gerichtete Reibkraft $F_R$ und das dadurch entstehende Reibmoment $M_R$ steht in keinem Zusammenhang mit der Dicke des Reibbelags 11a und ist ausschließlich von der Betätigungskraft $F_K$ und den Reibbeiwerten $\mu S$ zwischen der den Führungsflächen 13 des Bremsbelags 5 bzw. der Trägerplatte 10a am Bremsträger 7 abhängig (siehe dazu auch Fig. 7).

Sollen beide den Schrägverschleiß der Bremsbeläge verursachende Effekte X) , Y) durch die Verkleinerung der Wirkfläche des Reibbelags 11a an der Auslaufseite A des zuspannseitigen Bremsbelages 5 erzielt werden, muss diese Verkleinerung in dem dem Servoeffekt entgegenwirkenden Teil der Flächenreduzierung des zuspannseitigen Reibbelags 11a mit der Dicke des Reibbelags 11a veränderlich gestaltet sein und in dem zweiten -den Reibkrafteffekt bzw. Effekt Y an der Belagabstützung ausgleichenden Teil- unabhängig von der Dicke des Reibbelags 11a gestaltet sein.

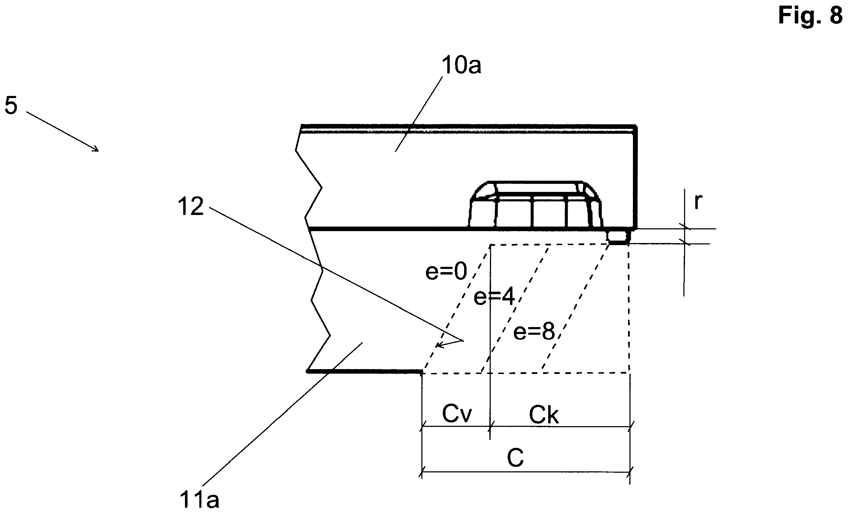

In Fig. 8 ist eine derartige Anpassung der Wirkfläche des Reibbelags 11a beispielhaft dargestellt.

Fig. 8 zeigt die auslaufseitige Hälfte des zuspannseitigen Bremsbelags 5 mit der oben beschriebenen Flächenanpassung. Aus der Fig. 8 ist eine Ausnehmung des zuspannseitigen Reibbelags 11a am auslaufseitigen Endbereich erkennbar. Die gestrichelt dargestellte Außenkontur entspricht der Form des Reibbelags 11a ohne Wirkflächenanpassung.

Die die Ausnehmung C eingrenzende, mit e = 0 gekennzeichnete Schräge bzw. Abschrägung 12 sowie die parallel zur Trägerplatte 10a verlaufende und die notwendige Restdicke r des Reibbelag 11a kennzeichnende Gerade entsprechen der erforderlichen Änderung der Reibbelaggeometrie, wenn beide den Schrägverschleiß der Bremsbeläge verursachenden Effekte durch die Geometrieänderung des Reibbelags 11a kompensiert werden sollen.

Die Ausnehmung C ist unterteilt in den von der Dicke des Reibbelags 11a abhängigen Bereich Cv und dem Bereich einer gleichbleibenden Ausnehmung $C_K$. Der im Volumen deutlich kleinere Bereich Cv dient der Kompensation des sogenannten Servoeffektes bzw. des Effekts X), der Bereich $C_K$ soll die Wirkung der Reibkraft der Trägerplatte 10a am Bremsträger 7 (Effekt Y) ausgleichen.

Ein Nachteil der Kompensation des Schrägverschleißes der Bremsbeläge durch die Wirkflächenreduzierung des Reibbelags 11a auf der Auslaufseite A des zuspannseitigen Bremsbelages 5 ist der Verlust an wirksamer Reibfläche und an wirksamen Verschleißvolumen, was der Anwendung dieser Methode entgegensteht.

Aus Fig. 8 und der nachfolgenden Beispielrechnung zu Fig. 7 ist entnehmbar, dass die zur Kompensation des Reibkraftanteils notwendige Ausnehmung $C_K$ etwa das dreifache Volumen der den Servoeffekt kompensierenden Ausnehmung Cv beinhaltet.

Aus diesem Grund ist es vorteilhaft, die Methode der Wirkflächenreduzierung nur zum Ausgleich des belagdickenabhängigen Servoeffektes (Effekt X) anzuwenden und dies mit einer zweiten Maßnahme zu kombinieren, die zur Kompensation des von der momentanen Dicke des Reibbelags 11a unabhängigen Reibkrafteffektes (Effekt Y) geeignet ist.

Es zeigt sich, dass die Anwendung der Methode des Mittenversatzes des Druckstempels 8 bzw. dessen Druckplatte 9 zum Ausgleich des Reibkrafteffektes bzw. Effekt Y) eine vorteilhafte Ergänzung zur Nutzung der Wirkflächenreduzierung zum Ausgleich des belagdickenabhängigen Servoeffekts bzw des Effekts X) darstellt.

Sofern im Folgenden der Mittenversatz des Druckstempels 8 erwähnt wird, so ist damit der Abstand der Wirkebene W des Druckstempels 8 von der Mittelebene S der Scheibenbremse 1 gemeint, der durch den Versatz des Flächenschwerpunktes der Druckplatte 9 relativ zur Symmetrieebene des Druckstempels 8 hervorgerufen wird.

Der Mittenversatz des Druckstempels 8 von z.B. e = 4 mm reduziert den Betrag der erforderlichen Ausnehmung $C_K$ um den doppelten Betrag, also 8 mm. Der Mittenversatz e des Druckstempels 8 kann je nach den gegebenen geometrischen Möglichkeiten in einem rel. weiten Dimensionsrahmen eingesetzt werden.

Darüber hinaus ist es vorteilhaft, den Mittenversatz e nur zur Verringerung der Aussparung $C_K$ einzusetzen, um sowohl den notwendigen Mittenversatz e des Druckstempels 8 als auch die Größe der erforderlichen Abschrägung 12 des Reibbelags 11a in vertretbaren Grenzen zu halten.

Im Folgenden wird auf Bezugnahme auf Fig. 7, die den zuspannseitigen Bremsbelag 5 mit den geometrischen Verhältnissen und den Kraftangriffspositionen zeigt, eine rechnerische Bestimmung des Betrages der Aussparung C und der geometrischen Gestaltung der Aussparung C sowie den Anteilen der variablen Aussparung Cv und des konstanten Teils $C_K$ gegeben.

$H_{max}$ = 22,5 mm

$H_{min}$ = 6,5 mm

$F_K$ = Zuspannkraft

$\mu_B$ = 0,375 (Reibbeiwert zwischen Reibbelag 11a und Bremsscheibe 4)

$\mu_S$ = 0,15 (Reibbeiwert zwischen Trägerplatte 10a und Bremsträger 7)

e = Mittenversatz des Druckstempels 8

C/2 = Verschiebung des Flächenschwerpunktes des Reibbelags 11

$L_B$ = Länge der Trägerplatte 10

r = min. Restdicke des Reibbelags 11

| | |
|---|---|
| Moment aus Servo-Effekt: | $M_S = F_K * \mu_B * H$ |
| Reibmoment: | $M_R = F_U * \mu_S * L_B/2$ |
| Umfangskraft: | $F_U = F_K * \mu_B$ |
| Reibkraft: | $F_R = F_U * \mu_S$ |
| Korrekturmoment: | $M_K = F_K (e + C/2)$ |

Berechnung des Maßes C:

$$M_S + M_R - M_K = 0$$

$$F_K * \mu_B * H + F_K * \mu_B * \mu_S (L_B/2 - e) - F_K (e + C/2) = 0$$

$$\mu_B * H + \mu_B * \mu_S (L_B/2 - e) - (e + C/2) = 0$$

$$C = 2 (\mu_B * H + \mu_B * \mu_S (L_B/2 - e) - e)$$

Wertetabelle:

| e | C für $H_{max}$ | C für $H_{min}$ |
|---|---|---|
| 9 | 14,0625 | -0,1875 |
| 8 | 16,175 | 1,925 |
| 6 | 20,400 | 6,150 |
| 4 | 24,625 | 10,375 |
| 2 | 28,850 | 14,600 |
| 0 | 33,075 | 18,825 |

Der Betrag für $C_{Vmax}$ ergibt sich aus der Differenz der C - Werte für $H_{max}$ und $H_{min}$ und beträgt für alle Werte des Mittenversatzes des Druckstempels 8 bei max. Dicke des Reibbelags 11a (neuer Bremsbelag 5) 14,25 mm.

Der Cv - Wert nimmt proportional zur Dicke des Reibbelags 11a ab. Der Betrag $C_K$ ergibt sich als die Differenz aus

$$C - C_{Vmax} = 18,825 \text{ mm}$$

und ist von der Dicke H unabhängig, wird aber bei Vorhandensein des Mittenversatzes e des Druckstempels 8 um den doppelten Betrag des Mittenversatzes e vermindert. Z.B. ist bei 6 mm Mittenversatz e der Wert

$$C_K = 18,825 - 12 = 6,825 \text{ mm}.$$

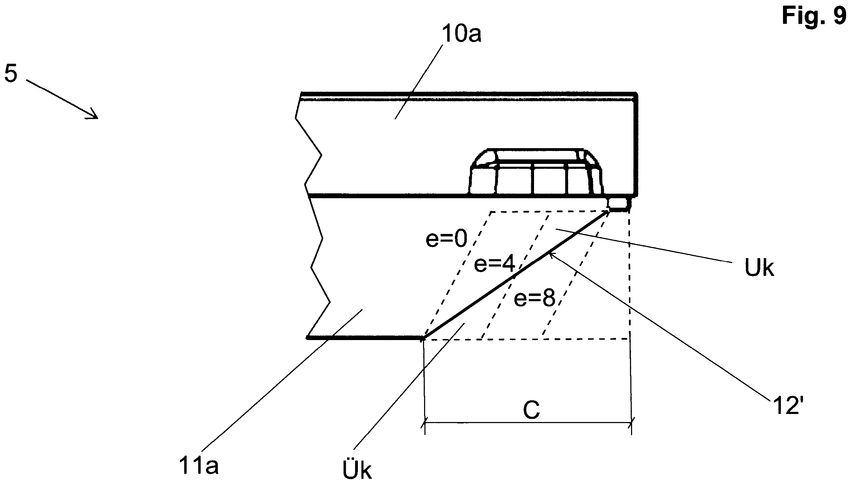

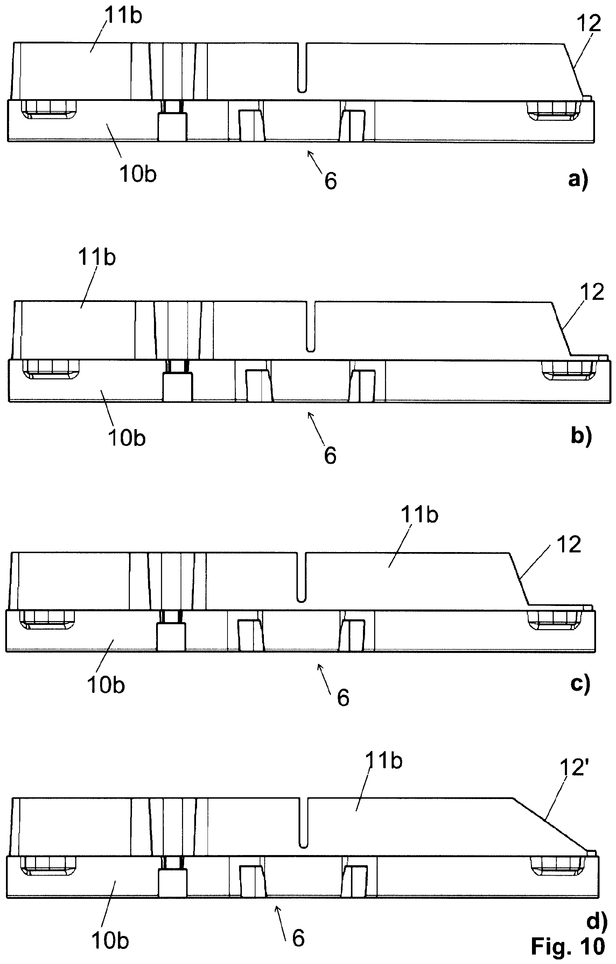

In Fig. 8, Fig. 9 und insbesondere in Fig. 10a bis 10d ist die Gestaltung der Aussparung für unterschiedliche Beträge des Mittenversatzes e des Druckstempels 8 dargestellt. Diese Form der Aussparung, jeweils gepaart mit dem entsprechenden Mittenversatz e des Druckstempels 8, ergibt bei den zugrundegelegten Randbedingungen für jeden Verschleißzustand des Reibbelags 11a einen Schrägverschleiß mit dem Betrag Null.

Der Verlust an Reibbelag-Verschleißvolumen beträgt ohne Mittenversatz e des Druckstempels 8 10,39% und bei einem Mittenversatz des Druckstempels 8 von 9,4 mm ca. 2,5%.

Bei geringen Werten des Mittenversatzes e des Druckstempels 8 ergibt sich durch die dann notwendigen relativ großen Beträge für $C_K$ (z.B. bei e = 4mm beträgt $C_K$ = 10,375 mm) und aufgrund der abgesetzten Form der Aussparung eine auffällige Reduzierung der Wirkfläche des Reibbelags 11.

Dieser Nachteil wird vermieden, wenn eine Gestaltung der Aussparung in Form der Abschrägung 12' wie in Fig. 9 und Fig. 10d dargestellt, gewählt wird. Die Abschrägung 12' ist als einfache auslaufseitige Schräge ausgebildet, in Fig. 9 und Fig. 10d dargestellt als eine Vollinie, die hier unter einem Winkel alpha von 60° (zur Definition des Winkel alpha siehe Fig. 5a) verläuft und in Kombination mit dem Mittenversatz des Druckstempels 8 von e = 4 mm zur Anwendung kommt. Diese gestrichelte Linie schneidet die dem Mittenversatz des Druckstempels 8 e = 4 mm zugeordnete Schräge etwa bei halber Reibbelagdicke.

D.h. bei einem neuen Bremsbelag 5 wird die Schrägverschleißtendenz zunächst etwas überkompensiert. Ab der halben Reibbelagdicke tritt eine Umkehrung dieses Effektes ein, so dass bei voll verschlissenem Reibbelag 11a eine gleichmäßige Rest-Reibbelagdicke r erzielt wird. In Fig. 9 sind diese Bereiche der Überkompensation bzw. Unterkompensation als Dreiecksflächen $Ü_K$ und $U_K$ sowie die verbleibende Rest-Reibbelagdicke r = 2 mm dargestellt.

Durch eine optionale geometrische Gestaltung der Abschrägung 12, 12' des Reibbelags 11a, die nicht an einer Kante der Trägerplatte 10a endet, sondern einen Bereich ausformt, der die Rest-Reibbelagdicke r (siehe Fig. 7) repräsentiert, ist zudem ein vorteilhaft von außen sichtbarer und deshalb einfach zu erfassender Verschleißindikator des zuspannseitigen Reibbelags 11a und damit des Bremsbelages 5 geschaffen

Die Ausführungsform der Abschrägung 12' als einfache Auslaufschräge ist fertigungstechnisch vorteilhaft unkompliziert zu realisieren und lässt optisch den unvermeidbaren Verlust an Verschleißvolumen von ca. 5% weniger auffällig wirken.

Es ist auch vorteilhaft, wenn der reaktionsseitige Bremsbelag 6 nach einer weiteren Variante ebenfalls einen Anteil zur Kompensation des Schrägverschleißes der Bremsbeläge 5, 6 leistet und deshalb analog zum zuspannseitigen Bremsbelag 5 ausgebildet ist. Demnach weist der Reibbelag 11b des reaktionsseitigen Bremsbelags 6 -vorzugsweise aber nicht zwingend- ebenfalls eine auslaufseitige Abschrägung 12, 12' auf (in Fig. 1 und 2 nicht dargestellt).

Durch die Verteilung der Maßnahmen zur Kompensation des Schrägverschleißes der Bremsbeläge 5, 6 auf mehrere Maßnahmen ergibt es sich, dass jede dieser Maßnahmen nur einen Teil des erforderlichen Betrages zur Kompensation des Schrägverschleißes beiträgt. Hierdurch ist vorteilhaft gewährleistet, dass der Änderungsaufwand der betroffenen Bauteile zur Erreichung einer vollständigen Kompensation des Schrägverschleißes der Bremsbeläge gering ist. Ferner ergibt sich für den zuspannseitigen Bremsbelag 5 -optional auch für den reaktionsseitigen Bremsbelag 6- vorteilhaft eine geringstmögliche Wirkflächenreduzierung des jeweiligen Reibbelags 11a durch die jeweilige Abschrägung 12, 12'.

Die Bauteile, die jeweils zu einem Teil zur Kompensation des Schrägverschleißes beitragen, sind der Druckstempel 8 durch den Mittenversatz e der Druckplatte 9 relativ zur Symmetrieebene S der Scheibenbremse 1 und / oder der zuspannseitige Bremsbelag 5, durch eine entsprechend bemessene Abschrägung 12, 12' des Reibbelags 11a, die Belagträgerplatte 10a des zuspannseitigen Bremsbelags 5 sowie -vorzugsweise aber nicht zwingend- der reaktionsseitige Bremsbelag 6, ebenfalls durch eine entsprechend bemessene Abschrägung 12, 12' des Reibbelags 11b.

Dadurch wird mit geringem Aufwand eine Scheibenbremse 1 mit einer kompakten Bauform mit vorteilhaft optimiertem Verhalten zur Kompensation des Schrägverschleißes der Bremsbeläge 5, 6 geschaffen.

In Fig. 10a bis Fig. 10d sind die Varianten der Abschrägung 12, 12' für unterschiedliche Beträge des Mittenversatzes e des Druckstempels 8 übersichtlich dargestellt. Zu den technischen Zusammenhängen in Bezug auf die Dimensionierung der Abschrägung 12, 12' wird auf die Fig. 8 und 9 sowie auf die Beschreibung dieser Figuren verwiesen.

In Fig. 10a ist der reaktionseitige Bremsbelag 6 mit einer Ausnehmung $C_K$ für einen Mittenversatz des Druckstempels 8 von e = 8 mm versehen. Zur Berechnug der Ausnehmungen $C_K$ und $C_V$ wird auf die ausführlichen Berechnungen zu Fig. 7 verwiesen. Die Ausnehmung $C_V$ bildet die Abschrägung 12 unter einem Winkel alpha bevorzugt zwischen 10° und 30°, besonders bevorzugt zwischen 15° und 25°.

In Fig. 10b ist der reaktionseitige Bremsbelag 6 mit einer Ausnehmung $C_K$ für einen Mittenversatz des Druckstempels 8 von e = 4 mm versehen. Zur Berechnug der Ausnehmungen $C_K$ und $C_V$ wird auf die ausführlichen Berechnungen zu Fig. 7 verwiesen. Die Ausnehmung $C_V$ bildet die Abschrägung 12 unter einem Winkel alpha bevorzugt zwischen 10° und 30°, besonders bevorzugt zwischen 15° und 25°.

In Fig. 10c ist der reaktionseitige Bremsbelag 6 mit einer Ausnehmung $C_K$ für einen Mittenversatz des Druckstempels 8 von e = 0 mm versehen. Zur Berechnug der Ausnehmungen $C_K$ und $C_V$ wird auf die ausführlichen Berechnungen zu Fig. 7 verwiesen. Die Ausnehmung $C_V$ bildet die Abschrägung 12 unter einem Winkel alpha bevorzugt zwischen 10° und 30°, besonders bevorzugt zwischen 15° und 25°.

In Fig. 10d ist der reaktionseitige Bremsbelag 6 mit einer Ausnehmung $C_K$ für einen Mittenversatz des Druckstempels 8 von e = 4 mm versehen. Zur Berechnug der Ausnehmungen $C_K$ und Cv wird auf die ausführlichen Berechnungen zu Fig. 7 verwiesen. Die Ausnehmung Cv und die ausnehmung $C_K$ bilden die Abschrägung 12', die so ausgelegt ist, dass sie den Servoeffekt (Effekt X) zunächst überkompensiert und bei weiter verschließenden Reibbelag 11b unterkompensiert (siehe auch Fig. 9), unter einem Winkel alpha bevorzugt zwischen 30° und 65°, besonders bevorzugt zwischen 50° und 65°.

Der Grad der Überkompensation $Ü_K$ der Abschrägung 12' liegt bevorzugt zwischen 70% und 30% über dem nominalen Wert des Servoments Ms, besonders bevorzugt zwischen 45% und 55%. Der Grad der Unterkompensation $Ü_K$ der Abschrägung 12' liegt bevorzugt zwischen 70% und 30% unter dem nominalen Wert des Servomemonts Ms, besonders bevorzugt zwischen 45% und 55%.

BEZUGSZEICHENLISTE

| | |
|---|---|
| 1 | Scheibenbremse |
| 2 | Bremssattel |
| 3 | Gehäuse |
| 4 | Bremsscheibe |
| 5 | Bremsbelag |
| 6 | Bremsbelag |
| 7 | Bremsträger |
| 8 | Druckstempel |
| 9 | Druckplatte |
| 10 | Trägerplatte |
| 11 | Reibbelag |
| 12, 12' | Abschrägung |
| 13 | Führungsfläche |
| 14a, b | Ansätze |
| 15 | Führungslager |
| 16 | Führungslager |
| 17a, b | Ausnehmungen |
| 19 | Feder |
| 20 | Feder |
| 21 | Steg |
| 22 | Niederhaltebügel |

| | |
|---|---|
| A | Auslaufseite |
| E | Einlaufseite |
| D | Drehrichtung |
| S | Symmetrieebene |
| W | Wirkebene |
| $\alpha$ | Winkel |

| | |
|---|---|
| Ms | Servo-Drehmoment |
| $M_R$ | Reibmoment |
| $M_K$ | Korrekturmoment |
| Fu | Umfangskraft |
| $F_K$ | Zuspannkraft |
| $F_R$ | Reibkraft |
| H | Hebelarm |
| r | Restdicke |
| $L_B$ | Länge |
| e | Mittenversatz |
| $\mu_S$ | Reibbeiwert |
| $\mu_B$ | Reibbeiwert |
| C | Ausnehmung |
| $C_{Vmax}$ | Ausnehmung |
| Cv | Ausnehmung |
| $C_K$ | Ausnehmung |
| $U_K$ | Fläche |
| $Ü_K$ | Fläche |

**Patentansprüche**

1.  Scheibenbremse (1) für Nutzfahrzeuge, die zumindest folgende Merkmale aufweist:

    - eine Bremsscheibe (4), einen Bremssattel (2), der die Bremsscheibe (4) überspannt und einen Bremsträger (7),

- einen zuspannseitigen Bremsbelag (5) und einen reaktionsseitigen Bremsbelag (6) von denen zumindest der zuspannseitige Bremsbelag (5) in einem Belagschacht der Bremsträgers (5) aufgenommen ist,
- wobei in dem Bremssattel (2) eine Zuspannvorrichtung angeordnet ist, die einen einzigen Druckstempel (8) aufweist, der über eine Druckplatte (9) bei einer Bremsung eine Zuspannkraft ($F_K$) auf den zuspannseitigen Bremsbelag (5) ausübt,
- eine Mittel- und/oder Symmetrieebene (S) der Bremsscheibe (4),
- eine auf eine Vorwärtsdrehrichtung der Bremsscheibe (4) bezogene Einlaufseite (E) und eine Auslaufseite (A),

wobei

A) eine Wirkebene (W) der Druckplatte (9) einen Mittenversatz e in Richtung der Auslaufseite (A) beabstandet zu der Mittelebene (S) der Scheibenbremse (1) aufweist, und/oder
B) wenigstens der zuspannseitige Bremsbelag (5) eine Abschrägung (12) an der Auslaufseite (A) aufweist,

**dadurch gekennzeichnet, dass**
die Druckplatte (9) eine zu der Mittelebene (S) der Scheibenbremse (1) asymmetrische, nicht kreisrunde, vorzugsweise ovale, Geometrie aufweist.

2. Scheibenbremse (1) nach Anspruch 1, **dadurch gekennzeichnet, dass** der Bremsträger (7) die Bremsscheibe (4) rahmenartig umspannt und dass in ihm der zuspannseitige Bremsbelag (5) und der reaktionsseitige Bremsbelag (6) aufgenommen sind.

3. Scheibenbremse (1) nach Anspruch 1 oder 2, **dadurch gekennzeichnet, dass** ein einlaufseitiger 14a) der zuspannseitigen Trägerplatte (10a) des zuspannseitigen Bremsbelages (5) in eine einlaufseitige Ausnehmung (17a) des Bremsträgers (7) eingreift.

4. Scheibenbremse (1) nach einem der vorstehenden Ansprüche, **dadurch gekennzeichnet, dass** die Druckplatte (9) einstückig mit dem Druckstempel (8) ausgebildet ist.

5. Scheibenbremse (1) nach einem der vorgenannten Ansprüche, **dadurch gekennzeichnet, dass** der Druckstempel (8) in der Mittelebene (S) der Scheibenbremse (1) geführt ist.

6. Scheibenbremse (1) nach einem der vorstehenden Ansprüche, **dadurch gekennzeichnet, dass** die Wirkebene (W) an der asymmetrischen Druckplatte, insbesondere ovalen Druckplatte (9) zur Mittelebene (S) der Scheibenbremse (1) in Richtung der Auslaufseite (A) der Bremsscheibe (4) versetzt liegt.

7. Scheibenbremse (1) nach einem der vorgenannten Ansprüche, **dadurch gekennzeichnet, dass** der zuspannseitige Bremsbelag (5) und der reaktionsseitige Bremsbelag (6) jeweils eine Trägerplatte (10a, 10b) und einen Reibbelag (11a, 11b) aufweisen.

8. Scheibenbremse (1) nach einem der vorgenannten Ansprüche, **dadurch gekennzeichnet, dass** die auslaufseitige Abschrägung (12, 12') derart ausgelegt ist, dass durch die auslaufseitige Abschrägung (12, 12') des Reibbelags (11a, 11b) eine ein Korrekturmoment ($M_K$) in Abhängigkeit von der Dicke (H) des Reibbelags (11a, 11b) vergrößernde Distanz zwischen Flächenschwerpunkt der Trägerplatte (10a, 10b) und der Wirkebene der Druckplatte (9) durch eine Verschiebung des Flächenschwerpunktes des Reibbelags (11a, 11b) entgegen der Drehrichtung (D) der Bremsscheibe (4) hervorgerufen ist.

9. Scheibenbremse (1) nach einem der vorgenannten Ansprüche, **dadurch gekennzeichnet, dass** die Abschrägung (12') derart ausgebildet ist, dass sie unter einem Winkel alpha bevorzugt zwischen 30° und 65°, besonders bevorzugt zwischen 50° und 65° verläuft, wodurch bei noch unverschlissenem Reibbelag (11a, 11b) zunächst eine Überkompensation ($Ü_K$) des Schrägverschleißes auf Grund eines Servomoments Ms erfolgt, die mit abnehmender Dicke des Reibbelags (11a, 11b) geringer wird und ab einer mittlerer Dicke des Reibbelags (11a, 11b) in eine Unterkompensation ($U_K$) übergeht.

10. Scheibenbremse (1) nach Anspruch 10, **dadurch gekennzeichnet, dass** der Grad der Überkompensation ÜK des Schrägverschleißes bevorzugt zwischen 70% und 30% über dem nominalen Wert des Servoments Ms, besonders bevorzugt zwischen 45% und 55% liegt und der Grad der Unterkompensation $Ü_K$ der Abschrägung 12' bevorzugt zwischen 70% und 30% unter dem nominalen Wert des Servomemonts Ms, besonders bevorzugt zwischen 45% und 55%.

11. Scheibenbremse (1) nach einem der vorgenannten Ansprüche, **dadurch gekennzeichnet, dass** die Abschrägung (12, 12') derart ausgebildet ist, dass ein Teil der Abschrägung (12, 12') der zumindest teilweisen Kompensation des Servoeffektes dient und ein anderer Teil die Wirkung der Reibkraft der Trägerplatte (10a, 10b) am Bremsträger (7) zumindest teilweise ausgleicht.

12. Scheibenbremse (1) nach einem der vorgenannten Ansprüche, **dadurch gekennzeichnet, dass** der Abstand als Mittenversatz e zwischen der Wirkebene (W) des Druckstempels (8) und der Mittelebene (S) zwischen e = 0 mm und e = 10 mm beträgt, wobei e = 0 mm beträgt, wenn beide den Schrägverschleiß der Bremsbeläge (5, 6) verursachenden Effekte durch die Geometrieänderung des Reibbelags (11a) in dem Fall B), in dem wenigstens der zuspannseitige Bremsbelag (5) die Abschrägung (12) an der Auslaufseite (A) aufweist, kompensiert werden.

13. Scheibenbremse (1) nach einem der vorgenannten Ansprüche, **dadurch gekennzeichnet, dass** der Abstand als Mittenversatz e zwischen der Wirkebene (W) des Druckstempels (8) und der Mittelebene (S) zwischen e = 2 mm und e = 4 mm liegt.

14. Scheibenbremse (1) nach Anspruch 13, **dadurch gekennzeichnet, dass** der Abstand (e) nach der Formel

$$M_S + M_R - M_K = 0$$

mit einem Moment Ms = $F_K * \mu_B * H$ aus einem Servo-Effekt, mit einem Reibmoment $M_R = Fu * \mu_S * L_B/2$ und einem Korrekturmoment $M_K = F_K (e + C/2)$ umgestellt zu der Formel

$$C = 2 (\mu_B * H + \mu_B * \mu_S (L_B/2 - e) - e)$$

bemessen ist,
mit

Zuspannkraft $F_K$,
Umfangskraft $F_u$,
Hebelarm H,
Reibbeiwert zwischen Reibbelag (11a) und Bremsscheibe (4) $\mu_B$,
Reibbeiwert zwischen Trägerplatte (10a) und Bremsträger (7) $\mu_S$,
Länge der Trägerplatte (10) $L_B$, und
Verschiebung des Flächenschwerpunktes des Reibbelags (11) C/2,
wodurch ein Betrag des Schrägverschleißes verringert ist, der durch das Reibmoment ($M_R$) verursacht ist.

15. Scheibenbremse (1) nach einem der vorgenannten Ansprüche, **dadurch gekennzeichnet, dass** die Abschrägung (12,12') des Reibbelags (11a, 11b) in einer Richtung parallel zur Bremsscheibendrehachse nicht an der auslaufseitigen Kante der Trägerplatte (10a, 10b) endet sondern zu dieser beabstandet endet, vorzugsweise derart, dass der Abstand der Rest-Reibbelagdicke (r) entspricht.

16. Scheibenbremse (1) nach einem der vorgenannten Ansprüche, **dadurch gekennzeichnet, dass** die Abschrägung (12, 12') des Reibbelags (11a, 11b) in Umfangsrichtung parallel zur Bremsscheibe nicht an der auslaufseitigen Kante der Trägerplatte (10) endet sondern zu dieser beabstandet ist und eine Ausnehmung ($C_K$) ausbildet.

17. Scheibenbremse (1) nach einem der vorgenannten Ansprüche, **dadurch gekennzeichnet, dass** die auslaufseitige Abschrägung (12) derart ausgelegt ist, dass sie unter einem Winkel alpha bevorzugt zwischen 10° und 30°, besonders bevorzugt zwischen 15° und 25° verläuft.

18. Fahrzeug, **gekennzeichnet durch** eine oder mehreren Scheibenbremsen (1) nach einem der Ansprüche 1 bis 17.

**Claims**

1.  Disc brake (1) for utility vehicles, comprising at least the following features:

    - a brake disc (4), a brake calliper (2) spanning the brake disc (4), and a brake carrier (7),
    - an application-side brake pad (5) and a reaction-side brake pad (6), of which at least the application-side brake pad (5) is accommodated in a pad cavity of the brake carrier (7),
    - wherein the brake calliper (2) houses an application device which comprises a single piston (8) which, during braking, exerts an application force ($F_K$) on the application-side brake pad (5) via a pressure plate (9),
    - a central plane and/or plane of symmetry (S) of the brake disc (4),
    - an entry side (E) relative to a forward direction of rotation of the brake disc (4) and an exit side (A),

    wherein

    A) an action plane (W) of the pressure plate (9) has a centre offset (e) in the direction of the exit side (A) at a distance from the central plane (S) of the disc brake (1), and/or
    B) at least the application-side brake pad (5) has a bevel (12) on the exit side (A), **characterized in that** the pressure plate (9) has a geometry which is asymmetric relative to the central plane (S) of the brake disc (1), non-circular, and preferably oval.

2.  Disc brake (1) according to Claim 1, **characterized in that** the brake carrier (7) spans the brake disc (4) in the manner of a frame, and houses the application-side brake pad (5) and the reaction-side brake pad (6).

3.  Disc brake (1) according to Claim 1 or 2, **characterized in that** an entry-side 14a) of the application-side carrier plate (10a) of the application-side brake pad (5) engages in an entry-side recess (17a) of the brake carrier (7).

4.  Disc brake (1) according to any of the preceding claims, **characterized in that** the pressure plate (9) is configured integrally with the piston (8).

5.  Disc brake (1) according to any of the preceding claims, **characterized in that** the piston (8) is guided in the central plane (S) of the disc brake (1).

6.  Disc brake (1) according to any of the preceding claims, **characterized in that** the action plane (W) lies on the asymmetric pressure plate, in particular the oval pressure plate (9), offset relative to the central plane (S) of the disc brake (1) in the direction of the exit side (A) of the brake disc (4).

7.  Disc brake (1) according to any of the preceding claims, **characterized in that** the application-side brake pad (5) and the reaction-side brake pad (6) each comprise a carrier plate (10a, 10b) and a friction lining (11a, 11b).

8.  Disc brake (1) according to any of the preceding claims, **characterized in that** the exit-side bevel (12, 12') is designed such that the exit-side bevel (12, 12') of the friction lining (11a, 11b) creates a distance, which enlarges a correction moment ($M_K$) depending on the thickness (H) of the friction lining (11a, 11b), between the centroid of the carrier plate (10a, 10b) and the action plane of the pressure plate (9), due to a shift in the centroid of the friction lining (11a, 11b) against the rotation direction (D) of the brake disc (4).

9.  Disc brake (1) according to any of the preceding claims, **characterized in that** the bevel (12') is configured such that it runs at an angle alpha of preferably between 30° and 65°, particularly preferably between 50° and 65°, as a result of which, when the friction lining (11a, 11b) is still unworn, because of a servo moment $M_S$, an overcompensation ($Ü_K$) for the diagonal wear is made which reduces with diminishing thickness of the friction lining (11a, 11b) and transforms into an under-compensation ($U_K$) from a medium thickness of the friction lining (11a, 11b).

10. Disc brake (1) according to Claim 10, **characterized in that** the degree of overcompensation ($Ü_K$) for the diagonal wear is preferably between 70% and 30% above the nominal value of the servo moment $M_S$, particularly preferably between 45% and 55%, and the degree of under-compensation ($U_K$) of the bevel 12' lies preferably between 70% and 30% below the nominal value of the servo moment Ms, particularly preferably between 45% and 55%.

11. Disc brake (1) according to any of the preceding claims, **characterized in that** the bevel (12, 12') is configured such that part of the bevel (12, 12') serves for at least partially compensating for the servo effect, and another part at least partially compensates for the effect of the friction force of the carrier plate (10a, 10b) on the brake carrier (7).

**12.** Disc brake (1) according to any of the preceding claims, **characterized in that** the distance as centre offset e between the action plane (W) of the piston (8) and the central plane (S) is between e = 0 mm and e = 10 mm, wherein e = 0 if both effects causing the diagonal wear of the brake pads (5, 6) are compensated by the geometry change of the friction lining (11a) in case B), in which at least the application-side brake pad (5) has the bevel (12) on the exit side (A).

**13.** Disc brake (1) according to any of the preceding claims, **characterized in that** the distance as centre offset e between the action plane (W) of the piston (8) and the central plane (S) is between e = 2 mm and e = 4 mm.

**14.** Disc brake (1) according to Claim 13, **characterized in that** the distance (e) is dimensioned according to the formula

$$M_S + M_R - M_K = 0$$

with a moment $M_S = F_K * \mu_B * H$ from a servo effect, with a friction moment $M_R = F_U * \mu_S * L_B/2$ and a correction moment $M_K = F_K (e + C/2)$
transposed to the formula

$$C = 2 (\mu_B * H + \mu_B * \mu_S (L_B/2 - e) - e),$$

with

actuation force $F_K$,
circumferential force $F_U$,
lever arm H,
coefficient of friction between friction lining (11a) and brake disc (4) $\mu_B$,
coefficient of friction between carrier plate (10a) and brake carrier (7a) $\mu_S$,
length of the carrier plate (10) $L_B$, and
shift in the centroid of friction lining (11) C/2,
whereby an amount of diagonal wear which is caused by the friction moment ($M_R$) is reduced.

**15.** Disc brake (1) according to any of the preceding claims, **characterized in that** the bevel (12, 12') of the friction lining (11a, 11b) in a direction parallel to the brake disc rotation axis does not end at the exit-side edge of the carrier plate (10a, 10b) but ends spaced therefrom, preferably such that the distance corresponds to the residual friction lining thickness (r).

**16.** Disc brake (1) according to any of the preceding claims, **characterized in that** the bevel (12, 12') of the friction lining (11a, 11b) in the circumferential direction parallel to the brake disc does not end at the exit-side edge of the carrier plate (10) but is spaced therefrom and forms a recess ($C_K$).

**17.** Disc brake (1) according to any of the preceding claims, **characterized in that** the exit-side bevel (12) is designed such that it runs at an angle alpha of preferably between 10° and 30°, particularly preferably between 15° and 25°.

**18.** Vehicle, **characterized by** one or more disc brakes (1) according to any of Claims 1 to 17.


**Revendications**

**1.** Frein (1) à disque de véhicule utilitaire, qui a au moins les caractéristiques suivantes :

- un disque (4) de frein, un étrier (2) de frein, qui chevauche le disque (4) de frein et un support (7) de frein,
- une garniture (5) de frein du côté du serrage et une garniture (6) de frein du côté de la réaction, dont au moins la garniture (5) de frein du côté du serrage est logée dans un puits de garniture du support (5) de frein,
- dans lequel, dans l'étrier (2) de frein, est disposé un dispositif de serrage, qui a un seul piston (8) d'application d'une pression, qui applique, par un plateau (9) d'application d'une pression, lors d'un freinage, une force ($F_K$)

de serrage à la garniture (5) de frein du côté du serrage,
- un plan (S) médian et/ou de symétrie du disque (4) de frein,
- un côté (E) d'entrée et un côté (A) de sortie rapporté à un sens de rotation vers l'avant du disque (4) de frein,

dans lequel

A) un plan (W) d'action du plateau (9) d'application d'une pression a un décalage médian en direction du côté (A) de sortie à distance du plan (S) médian du frein (1) à disque, et/ou
B) au moins la garniture (5) de frein du côté du serrage a un chanfreinage (12) du côté (A) de sortie,

**caractérisé en ce que**
le plateau (9) d'application d'une pression a une géométrie non circulaire, de préférence ovale, dissymétrique par rapport au plan (S) médian du frein (1) à disque.

2. Frein (1) à disque suivant la revendication 1, **caractérisé en ce que** le support (7) de frein enveloppe, à la manière d'un cadre, le disque (4) de frein, et **en ce que** la garniture (5) de frein du côté du serrage et la garniture (6) de frein du côté de la réaction y sont logés.

3. Frein (1) à disque suivant la revendication 1 ou 2, **caractérisé en ce qu'un** côté (14a) d'entrée de la plaque (10a) de support du côté du serrage de la garniture (5) de frein du côté du serrage pénètre dans un évidement (17a) du côté de l'entrée du support (7) de frein.

4. Frein (1) à disque suivant l'une des revendications précédentes, **caractérisé en ce que** le plateau (9) d'application d'une pression est constitué d'une pièce avec le piston (8) d'application d'une pression.

5. Frein (1) à disque suivant l'une des revendications précédentes, **caractérisé en ce que** le piston (8) d'application d'une pression est guidé dans le plan (S) médian du frein (1) à disque.

6. Frein (1) à disque suivant l'une des revendications précédentes, **caractérisé en ce que** le plan (W) d'action sur le plateau dissymétrique d'application d'une pression, en particulier sur le plateau (9) ovale d'application d'une pression, est décalé par rapport au plan (S) médian du frein (1) à disque dans la direction du côté (A) de sortie du frein (4) à disque.

7. Frein (1) à disque suivant l'une des revendications précédentes, **caractérisé en ce que** la garniture (5) de frein du côté du serrage et la garniture (6) de frein du côté de la réaction ont chacune une plaque (10a, 10b) de support et une garniture (11a, 11b) de friction.

8. Frein (1) à disque suivant l'une des revendications précédentes, **caractérisé en ce que** le biseautage (12, 12') de côté de la sortie est conçu de manière à provoquer, par le biseautage (12, 12') du côté de la sortie de la garniture (11a, 11b) de friction, une distance, augmentant un couple ($M_K$) de correction en fonction de l'épaisseur (H) de la garniture (11a, 11b) de friction, entre le centre de gravité en surface de la plaque (10a, 10b) de support et le plan d'action du plateau (9) d'application d'une pression, par un décalage du centre de gravité en surface de la garniture (11a, 11b) de friction, dans le sens contraire au sens (D) de rotation du disque (4) de frein.

9. Frein (1) à disque suivant l'une des revendications précédentes, **caractérisé en ce que** le biseautage (12') est constitué de manière à s'étendre suivant un angle alpha, de préférence compris entre 30° et 65°, d'une manière particulièrement préférée entre 50° et 65°, grâce à quoi, pour une garniture (11a, 11b) de friction, qui n'est pas encore usée, il se produit d'abord une surcompensation ($Ü_K$) de l'usure par inclinaison sur la base d'un servo-couple $M_S$, qui devient plus petit, au fur et à mesure que diminue l'épaisseur de la garniture (11a, 11b) de frein, et qui se transforme, à partir d'une épaisseur moyenne de la garniture (11a, 11b) de friction, en une surcompensation ($U_K$).

10. Frein (1) à disque suivant la revendication 10, **caractérisé en ce que** le degré de la surcompensation ÜK de l'usure par inclinaison est, de préférence compris entre 70 % et 30 % au-delà de la valeur nominale du servo-couple Ms, d'une manière particulièrement préférée entre 45 % et 55 % et le degré de la surcompensation ÜK du biseautage 12' est de préférence compris entre 70 % et 30 % sous la valeur nominale du servo-couple Ms, d'une manière particulièrement préférée entre 45 % et 55 %.

11. Frein (1) à disque suivant l'une des revendications précédentes, **caractérisé en ce que** le biseautage (12, 12') est constitué de manière à ce qu'une partie du biseautage (12, 12') serve à la compensation au moins en partie du servo-effet, et de manière à ce qu'une autre partie compense au moins en partie l'action de la force de friction de la plaque (10a, 10b) de support sur le support (7) de frein.

12. Frein (1) à disque suivant l'une des revendications précédentes, **caractérisé en ce que** la distance, comme décalage e moyen, entre le plan (W) d'action du piston (8) d'application d'une pression et le plan (S) médian, est comprise entre e = 0 mm et e = 10 mm, dans lequel e = 0 mm, si les deux effets provoquant l'usure par inclinaison des garnitures (5, 6) de frein sont compensés par la variation de géométrie de la garniture (11a) de friction dans le cas B), dans lequel au moins la garniture (5) de frein du côté du serrage a le biseautage (12) du côté (A) de sortie.

13. Frein (1) à disque suivant l'une des revendications précédentes, **caractérisé en ce que** la distance, comme décalage e médian entre le plan (W) d'action du piston (8) d'application d'une pression et le plan (S) médian, est comprise entre e = 2 mm et e = 4 mm. 1

14. Frein (1) à disque suivant la revendication 13, **caractérisé en ce que** la distance (e) est réglée par la formule

$$M_S \; + \; M_R \; - \; M_K \; = \; 0$$

avec un couple $M_S = F_K * \mu_B * H$, à partir d'un servo-effet avec un couple de frottement $M_R = F_U * \mu_S * L_B/2$ et un couple de correction $M_K = F_K (e + C/2)$ transformé en la formule

$$C \; = \; 2 \; (\mu_B \; * \; H \; + \; \mu_B \; * \; \mu_S \; (L_B/2 \; - \; e) \; - \; e)$$

avec

    force de serrage $F_K$,
    force de pourtour $F_U$,
    bras de levier H,
    coefficient de frottement entre la garniture (11a) et le disque (4) de frein $\mu_B$,
    coefficient de frottement entre la plaque (10a) de support et le support (7) de frein $\mu_S$,
    longueur de la plaque (10) de support $L_B$, et
    décalage du centre de gravité en surface de la garniture (11) de friction C/2,
    grâce à quoi est diminuée une contribution de l'usure à frottement, qui est provoquée par le couple ($M_R$) de frottement.

15. Frein (1) à disque suivant l'une des revendications précédentes, **caractérisé en ce que** le biseautage (12, 12') de la garniture (11a, 11b) de friction ne se termine pas dans une direction parallèlement à l'axe de rotation du disque de frein au bord du côté de la sortie de la plaque (10a, 10b) de support, mais se termine à distance de celle-ci, de préférence de manière à ce que la distance corresponde à l'épaisseur (r) restante de la garniture de friction.

16. Frein (1) à disque suivant l'une des revendications précédentes, **caractérisé en ce que** le biseautage (12, 12') de la garniture (11a, 11b) de friction ne se termine pas dans la direction du pourtour parallèlement au disque de frein au bord du côté de la sortie de la plaque (10) de support, mais à distance de celle-ci et constitue un évidement ($C_K$).

17. Frein (1) à disque suivant l'une des revendications précédentes, **caractérisé en ce que** le biseautage (12) du côté de la sortie est conçu de manière à s'étendre suivant un angle alpha, de préférence compris entre 10° et 30°, d'une manière particulièrement préférée entre 15° et 25°.

18. Véhicule, **caractérisé par** un ou plusieurs freins (1) à disque suivant l'une des revendications 1 à 17.

Fig. 1

Fig. 2

Fig. 3

**Fig. 4**

**Fig. 5a**

EP 3 510 298 B1

**Fig. 5b**

**Fig. 6a**

EP 3 510 298 B1

**Fig. 6b**

**Fig. 6c**

8

9

Fig. 7

EP 3 510 298 B1

Fig. 8

Fig. 9

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1396652 B1
- EP 2392835 B1
- FR 2312690 A
- DE 102011010912 A1

- US 6247561 B1
- US 2009145702 A1
- US 20090000893 A1